# EUROPEAN PATENT SPECIFICATION

(11) **EP 4 410 522 B1**
(45) Date of publication and mention of the grant of the patent: **13.05.2026**
(21) Application number: 24153891.7
(22) Date of filing: 25.01.2024
(51) Int. Cl.: B29C 65/08, B29C 65/00, B65B 51/30, B65B 9/207, B29C 65/02, B65B 9/20, B29C 65/36, B29K 705/02, B29L 31/00

(54) **PACKAGE FORMING APPARATUS FOR A PACKAGING MACHINE AND PACKAGING MACHINE FOR FORMING PACKAGES FILLED WITH A POURABLE PRODUCT**
VERPACKUNGSFORMVORRICHTUNG FÜR EINE VERPACKUNGSMASCHINE UND VERPACKUNGSMASCHINE ZUM FORMEN VON MIT EINEM FLIESSFÄHIGEN PRODUKT GEFÜLLTEN VERPACKUNGEN
APPAREIL DE FORMATION D'EMBALLAGES POUR UNE MACHINE D'EMBALLAGE ET MACHINE D'EMBALLAGE POUR FORMER DES EMBALLAGES REMPLIS D'UN PRODUIT VERSABLE

(30) Priority: 01.02.2023 IT 202300001572
(43) Date of publication of application: 07.08.2024
(73) Proprietor: Tetra Laval Holdings & Finance S.A., 1009 Pully (CH)
(72) Inventor: POPPI, Marco, 41123 Modena (IT); ORSINI, Ivan, 41123 Modena (IT); FERRARI, Fabio, 41123 Modena (IT)
(74) Representative: Tetra Pak Patent Attorneys

(56) References cited:
- EP-A1- 3 760 548
- IT-A1- 201900 007 272
- US-A- 3 008 278

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises at least one operative device having at least a first operative group and a second operative group configured to at least partially form and to transversally seal and cut in cooperation the, in use, advancing tube.

The operative device also comprises pair of interaction tabs controllable between a first limit position in which the interaction tabs are detached from the tube and a second limit position in which the interaction tabs interact with the advancing tube. The interaction tabs are more distanced from one another when being in the first limit position than
when being in the second limit position.

The package forming apparatus also comprises a cam mechanism configured to control the pair of interaction tabs between the first operative configuration and the second operative configuration.

The cam mechanism comprises a parallelogram system on which a cam follower runs, coming along with the need of a precise mounting.

Package forming apparatuses are disclosed in patent documents EP3760548A1 and IT201900007272, while patent document US3008278A discloses a bag forming apparatus. In particular EP3760548A1 discloses a package forming apparatus comprising movable interaction tabs and a cam system to move a pair of interaction tabs.

Even though the known package forming apparatuses and/or packaging machines work satisfactorily well, a desire is felt in the sector to further improve the known package forming apparatuses and/or the known packaging machines.

### DISCLOSURE OF INVENTION

It is therefore an object of the present invention to provide an improved package forming apparatus.

Additionally, it is an object of the present invention to provide an improved packaging machine.

According to the present invention, there is provided a package forming apparatus as claimed in claim 1.

Preferred non-limiting embodiments of the package forming apparatus are claimed in the claims being directly and indirectly dependent on claim 1. According to the present invention, there is also provided a packaging machine according to claim 14.

### BRIEF DESCRIPTION OF THE DRAWINGS

A non-limiting embodiment of the present invention will be described by way of example with reference to the accompanying drawings, in which:
Figure 1 is a schematic view of a packaging machine having a package forming apparatus according to the present invention, with parts removed for clarity;
Figure 2 is a schematic perspective view of a detail of the package forming apparatus of Figure 1, with parts removed for clarity;
Figure 3A is a perspective view of a detail of the package forming apparatus of Figure 1 being in a first configuration, with parts removed for clarity;
Figure 3B is a perspective view of the detail of the package forming apparatus of Figure 3A being in a second configuration, with parts removed for clarity;
Figure 4 is an enlarged perspective view of a portion of the detail of Figures 3A and 3B, with parts removed for clarity;
Figure 5 is a perspective view of another portion of the detail of Figures 3A and 3B, with parts removed for clarity; and
Figure 6 is an enlarged perspective view of some details of the package forming apparatus of Figures 1 and 2, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 may be configured to produce packages 2 from a multilayer packaging material. Preferentially, a multilayer packaging material having heat seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Preferentially, web 3 comprises successively arranged patterns, each pattern defining a final graphical pattern of the respective package 2. In other words, packaging machine 1 operates, in use, such to guarantee that packages 2 comprise the respective pattern.

Furthermore, packaging machine 1 may be configured to produce packages 2 by forming a tube 4 from web 3, longitudinally sealing tube 4, filling tube 4 with the pourable product and to transversally seal, and preferentially transversally cut tube 4.

According to some possible non-limiting embodiments, each package 2 may extend along a longitudinal axis A.

According to some possible embodiments, each package 2 may comprise at least a first transversal sealing band 5 arranged at a first end of package 2, and preferentially also a second transversal sealing band arranged at a second end of package 2 opposite to the first end.

Preferentially, each first transversal sealing band 5 may be substantially spaced apart from the respective second transversal sealing band along the respective longitudinal axis A.

Preferentially, each first transversal sealing band 5 may define a transversal top sealing band and each second transversal sealing band may define a transversal bottom sealing band.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

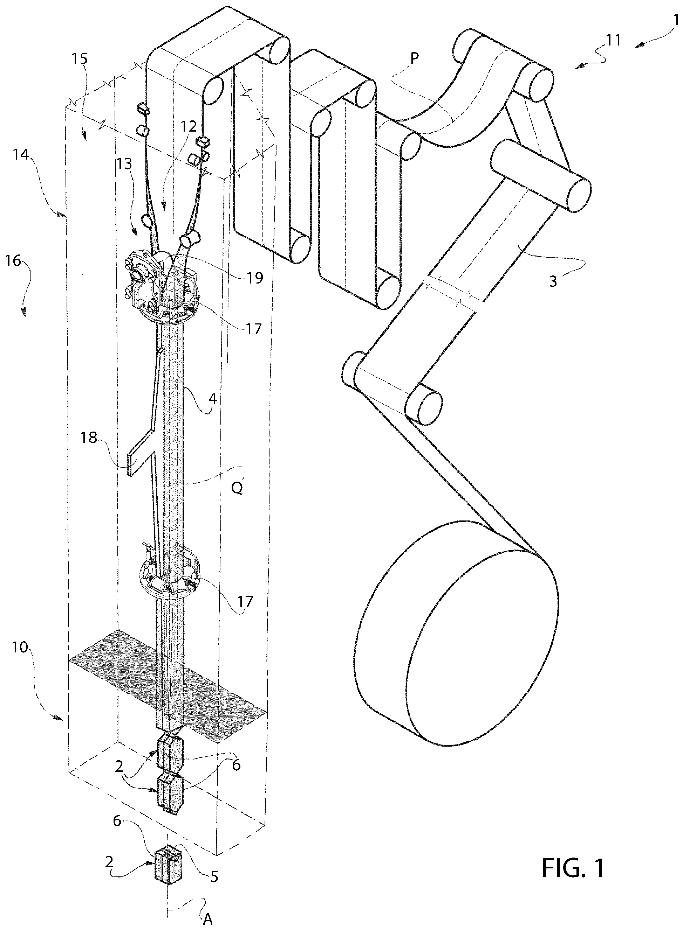

With particular reference to Figure 1, packaging machine 1 may comprise a package forming apparatus 10 configured to transversally seal, and preferentially to transversally cut tube 4 for obtaining semi-finalized packs, preferentially package pouches. Preferentially, package forming apparatus 10 may also be configured to form tube 4.

Preferentially, package forming apparatus 10 may comprise an advancement space within which, in use, tube 4 advances.

Additionally packaging machine 1 may comprise a final folding apparatus configured to receive the semi-finalized packs from package forming apparatus 10 and to form packages 2 from the semi-finalized packs.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to form tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to and/or at least partially within package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 may have a vertical orientation.

More specifically, tube forming and sealing device 12 may comprise at least two forming ring assemblies 17, preferentially arranged within isolation chamber 14, even more preferentially arranged within inner environment 15, being configured to gradually fold in cooperation with one another web 3 into tube 4, preferentially by overlapping the edges of web 3 with one another. Thereby, in use, seam portion 6 of tube 4 may be formed.

Additionally, tube forming and sealing device 12 may comprise a sealing head 18, preferentially arranged within isolation chamber 14, even more preferentially within inner environment 15, and configured to longitudinally seal tube 4, preferentially along longitudinal seam portion 6.

Moreover, tube forming and sealing device 12 may also comprise a pressure assembly configured to exert a mechanical force on longitudinal seam portion 6 to ensure sealing of tube 4 along longitudinal seam portion 6.

Preferentially, filling device 13 may comprise a filling pipe 19 being configured to direct, in use, the pourable product into tube 4. Preferentially, filling pipe 19 may, in use, be at least partially placed within tube 4 for feeding, in use, the pourable product into tube 4.

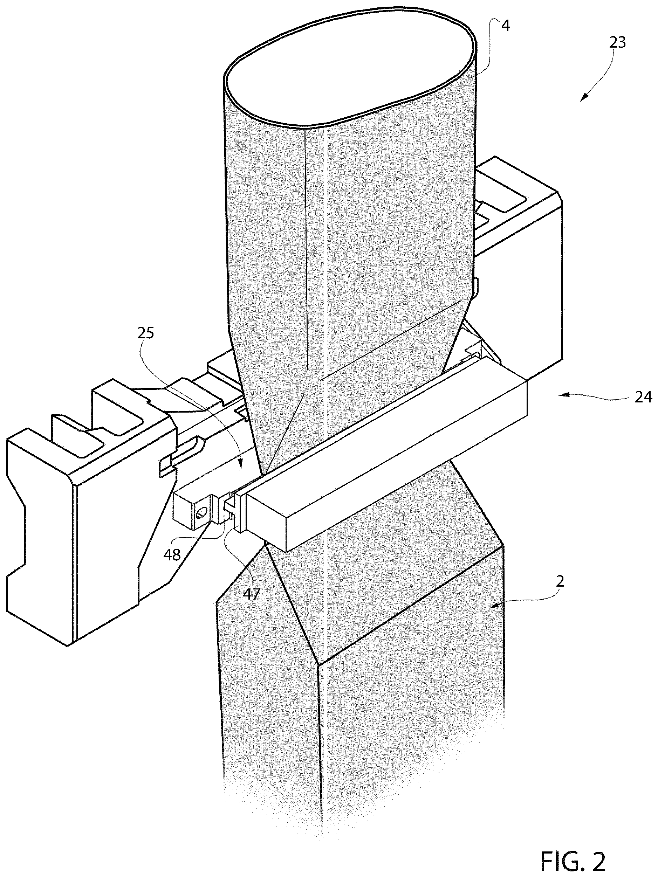

With particular reference to Figures 1 and 2, package forming apparatus 10 may comprise one or more, preferentially a plurality of, operative devices 23 (only partially shown to the extent necessary for the comprehension of the present invention), each one configured to at least transversally seal and preferentially to transversally cut tube 4 and/or to form (shape) tube 4.

Preferentially, package forming apparatus 10 may be configured to control each operative device 23 such to transversally seal and preferentially transversally cut tube 4 along equally spaced transversal cross sections, preferentially thereby forming the respective first transversal sealing bands 5 and/or the respective second transversal sealing bands.

According to some possible non-limiting embodiments, package forming apparatus 10 may comprise at least two operative devices 23, preferentially exactly two.

In further detail and with particular reference to Figure 2, each operative device 23 may comprise at least a first operative group 24 and a second operative group 25 configured to cooperate with one another to at least transversally seal, and preferentially cut and to also at least partially form, tube 4.

In particular, each first operative group 24 and the respective second operative group 25 may be movable with respect to one another, preferentially so as to move each first operative group 24 and the respective second operative group 25 towards and away from one another.

In more detail, each operative device 23 may be controllable between an active configuration, in which the respective first operative group 24 and the respective second operative group 25 are moved towards one another to seal, and preferentially also to transversally cut and/or to at least partially form, tube 4 and a rest configuration, in which the respective first operative group 24 and the respective second operative group 25 are withdrawn from one another.

Moreover, package forming apparatus 10 may also comprise a conveying unit configured to advance each first operative group 24 and each second operative group 25 along a respective first advancement path and a respective second advancement path, respectively.

In more detail, the first advancement path and the second advancement path may comprise an operative portion along which each first operative group 24 and each second operative group 25 advance, in use, in a direction of advancement of tube 4 and a return portion along which each first operative group 24 and each second operative group 25 advance, in use, in a direction opposite to the direction of advancement of tube 4 so as to bring each first operative group 24 and each second operative group 25 back to the respective operative portion.

Moreover, each operative device 23 may be controlled from the respective rest configuration to the respective active configuration during advancement of the respective first operative group 24 and the respective second operative group 25 along the respective operative portion, preferentially to transversally seal, and preferentially to also transversally cut and to at least partially form, tube 4.

In even further detail, in use, after completion of each transversal sealing, and preferentially the respective transversal cutting and/or the partial forming, of tube 4, each operative device 23 may be controlled back to the respective rest configuration.

In other words, during advancement of each first operative group 24 and the respective second operative group 25 along the respective operative portions, each first operative group 24 and the respective second operative group 25 may be moved towards one another. After termination of the respective transversal sealing, and preferentially the respective transversal cutting and/or the partial forming, of tube 4, each first operative group 24 and the respective second operative group 25 are withdrawn from one another.

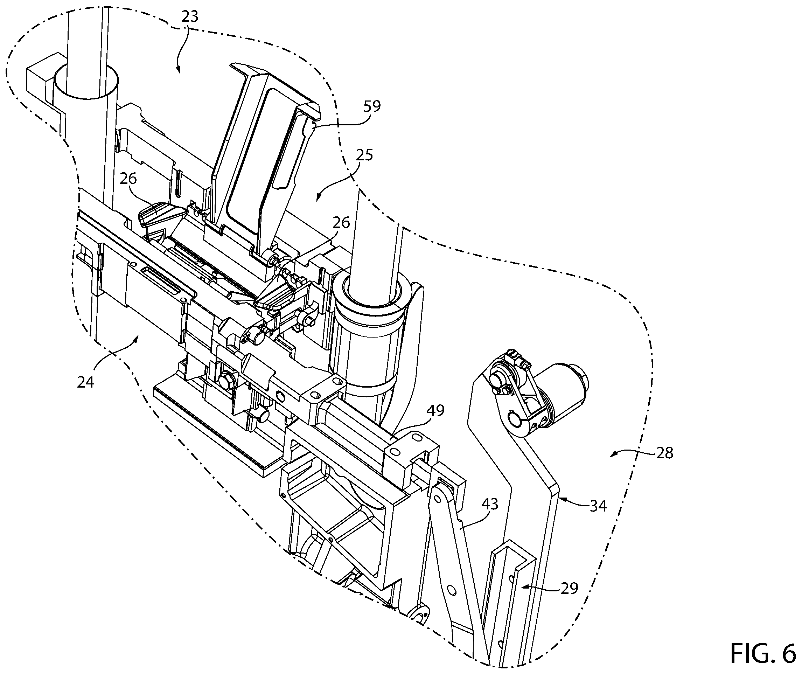

With particular reference to Figure 6, each operative device 23, preferentially one of the respective first operative group 24 and the respective second operative group 25, comprises a pair of movable interaction tabs 26 configured to interact, in use, with tube 4 from opposite sides thereof.

In particular, interaction tabs 26 of each pair of interaction tabs 26 are movable with respect to one another, preferentially so as to selectively move interaction tabs 26 towards and away from one another.

Preferentially, each pair of interaction tabs 26 is controllable between a first limit position in which the respective interaction tabs 26 are configured to be, in use, detached from tube 4 and a second limit position in which the respective interaction tabs 26 are configured to be, in use, in contact with tube 4.

Preferentially, the respective interaction tabs 26 of each pair of interaction tabs 26 may be closer to one another when being in the second limit position than when being in the first limit position. In other words, interaction tabs 26 are withdrawn from one another when being in the first limit position and are approached to one another when being in the second limit position.

In more detail, each pair of interaction tabs 26 may be configured to interact, preferentially when being in the second limit position, with the in use advancing tube 4 from opposite sides thereof for exerting a pulling force on tube 4.

In even more detail, each pair of interaction tabs 26 may be configured to control and/or modify advancement of tube 4 such that tube 4 is "in register" with the respective operative device 23, meaning that each pair of interaction tabs 26 guarantees that the respective operative device 23, preferentially the respective first operative group 24 and the respective second operative group 25, transversally seal and/or cut tube 4 at an intended region of the respective pattern, in particular such that the respective finalized package 2 has the respective desired pattern.

Furthermore, each pair of interaction tabs 26 may be configured to exert a controlled pulling force on tube 4 so as to "pull" tube 4 in a downstream direction along tube advancement path Q.

In further detail, the controlled pulling force may be dependent on the relative distance between the respective interaction tabs 26 of each pair, preferentially on the degree of controlling each pair of interaction tabs 26 between the respective first limit position and the respective second limit position. In other words, the controlled pulling force may depend on the actual interacting position in which the pair of interaction tabs 26 is stopped when interacting with tube 4, such actual interacting position being interposed between the respective first limit position and the respective second limit position or corresponding with the respective second limit position. In even other words, the controlled pulling force is a function of the relative distance of the respective interaction tabs 26 from one another.

Preferentially, with the respective pair of interaction tabs 26 being in the respective first limit position the respective interaction tabs 26 are, in use, detached (distanced) from tube 4 advancing along tube advancement path Q, i.e**.** the respective interaction tabs 26 are not in contact with tube 4, and thus do not exert any pulling force on tube 4. In other words, when the respective pair of interaction tabs 26 is in the respective first limit position the respective interaction tabs 26 are positioned so that they do not interact with tube 4 advancing along tube advancement path Q.

Preferentially, with the respective pair of interaction tabs 26 being in the respective second limit position the respective interaction tabs 26 are, in use, in contact with tube 4 advancing along tube advancement path Q, and preferentially exert a maximum pulling force on tube 4.

Furthermore, each pair of interaction tabs 26 may be configured such to be controlled (i.e. stopped) between the first limit position and the second limit position so as to control the pulling force exerted by the respective interaction tabs 26 on tube 4.

Alternatively or additionally, each pair of interaction tabs 26 may also be configured to fold tube 4 so as to define flaps of the respective semi-finalized packs.

In this context, it should be considered that each semi-finalized packs may comprise a pair of sealing fins arranged at opposite ends of the semi-finalized pack and flaps laterally protruding from the opposite ends.

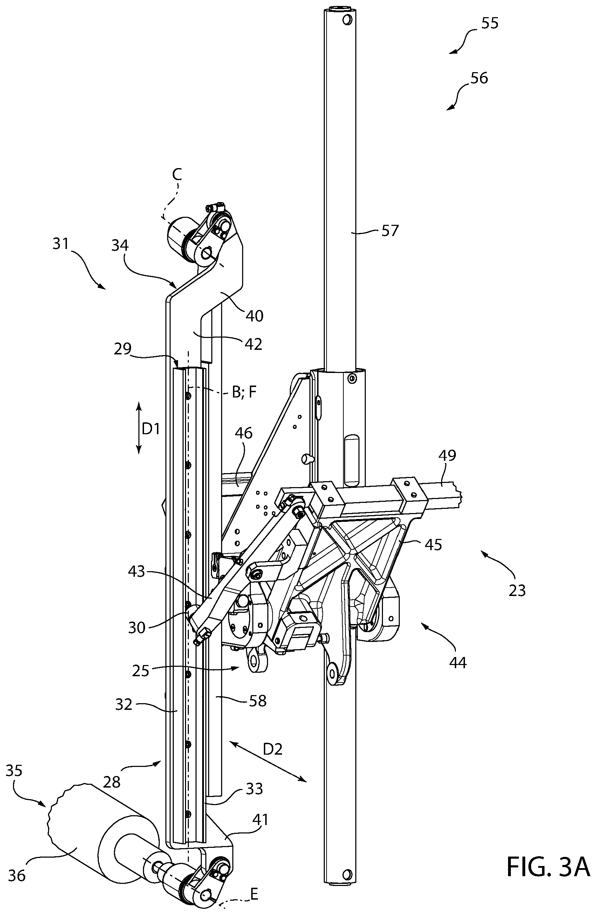

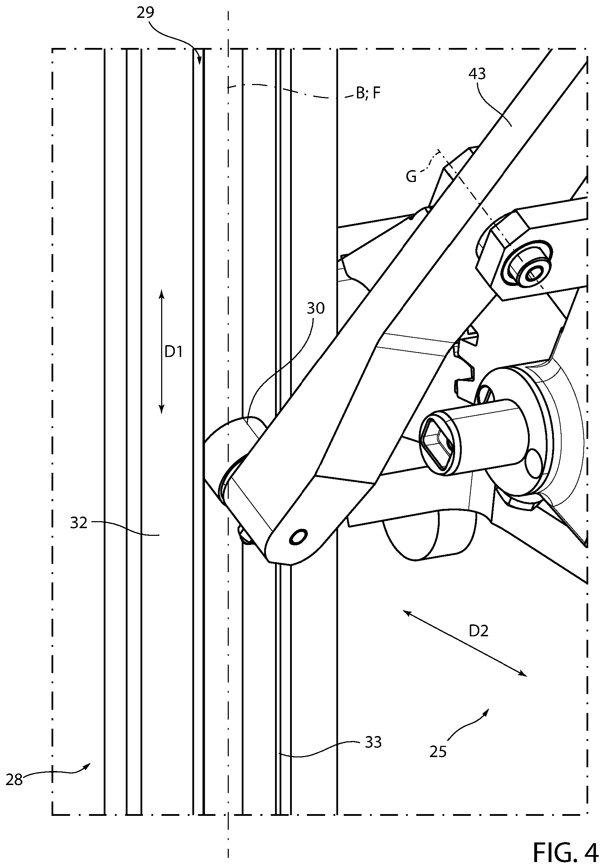

According to some preferred non-limiting embodiments and with particular reference to Figures 3A to 5, package forming apparatus 10 may also comprise a cam mechanism 28 configured to control the relative position of each pair of interaction tabs 26 with respect to one another during advancement of each first operative group 24 and the respective second operative group 25 along respectively the respective first advancement path, preferentially the respective operative portion, and the respective second advancement path, preferentially the respective operative portion.

More specifically, cam mechanism 28 may be configured to selectively control the relative position of each pair of interaction tabs 26 with respect to one another for selectively controlling the respective pair of interaction tabs 26 between the respective first limit position and the respective second limit position. Preferentially, cam mechanism 28 may be configured to control each pair of interaction tabs 26 between any relative position between the respective first limit position and the respective second limit position.

With particular reference to Figures 3A to 5, cam mechanism 28 may comprise:
- one or more cam channels 29; and
- one or more cam followers 30, each one connected to one respective pair of interaction tabs 26, movably arranged within one respective cam channel 29, and being configured to move within the respective cam channel 29 along an advancement direction D1 and during and/or as a consequence of the advancement of the respective first operative group 24 and the respective second operative group 25 along respectively the first advancement path, preferentially the respective operative portion, and the second advancement path, preferentially the respective operative portion.

In particular, advancement direction D1 may be defined by and/or be relative to cam channel 29.

Advantageously, the interaction of each cam follower 30 with the respective cam channel 29 allows to control the relative position between the respective interaction tabs 26 of the respective pair of interaction tabs 26, preferentially so as to control the respective pair of interaction tabs 26 between the first limit position and the second limit position.

In more detail, the interaction of each cam follower 30 with the respective cam channel 29 allows to control the relative position between the respective interaction tabs 26 of the respective pair so as to control the pulling force acting on tube 4, preferentially so as to guarantee that tube 4 is transversally sealed and/or cut at the desired position so as to be able to obtain packages 2 with the desired pattern.

According to some preferred non-limiting embodiments, cam mechanism 28 may comprise one respective cam channel 29 and one respective cam follower 30 for each operative device 23. In the specific example embodiment disclosed, cam mechanism 28 may comprise two cam channels 29 and two cam followers 30.

Advantageously, cam mechanism 28 may further comprise an actuation unit 31 configured to move, preferentially to selectively move, each cam channel 29 along a respective cam movement direction D2 transversal to the respective advancement direction D1.

It should be noted that actuation unit 31 may be configured to change the respective position of each cam channel 29, whereby the respective advancement direction D1 is defined in relation to the respective cam channel 29. In other words, each cam channel 29 may be arranged in different positions by actuation unit 31. However, cam channel 29 always defines the respective advancement direction D1.

Moreover, movement of each cam channel 29 along the respective cam movement direction D2 leads also to a movement of the respective cam follower 30 along the respective cam movement direction D2 resulting in a modification of the relative position of the respective interaction tabs 26 of the respective pair with respect to one another, preferentially so as to control the respective pair of interaction tabs 26 between the respective first limit position and the respective second limit position.

Preferentially, actuation unit 31 may be configured to control the extent of movement of cam channel 29 along the respective cam movement direction D2 so as to obtain a control of the pulling force exerted on tube 4 by the respective pair of interaction tabs 26.

According to some preferred non-limiting embodiments, each cam channel 29 rectilinearly extends along a central axis B.

Moreover, each cam follower 30 advances, in use, rectilinearly within the respective cam channel 29.

In further detail, each cam channel 29 may comprise a respective first wall 32 and a respective second wall 33 spaced apart from the respective first wall 32. The respective cam follower 29 may be interposed between and may be configured to engage, in use, the respective first wall 32 and the respective second wall 33, preferentially such that movement of cam channel 29 along the respective cam movement direction D2 is transferred to the respective cam follower 30.

In more detail, each first wall 32 and the respective second wall 33 may be parallel to one another.

Advantageously, each first wall 32 and/or the respective second wall 33 may be parallel to the respective central axis B.

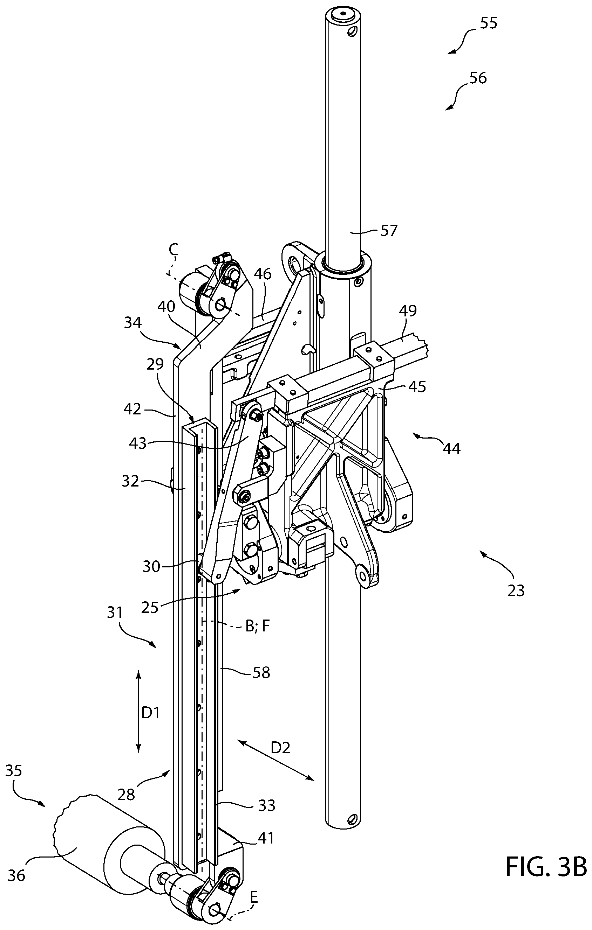

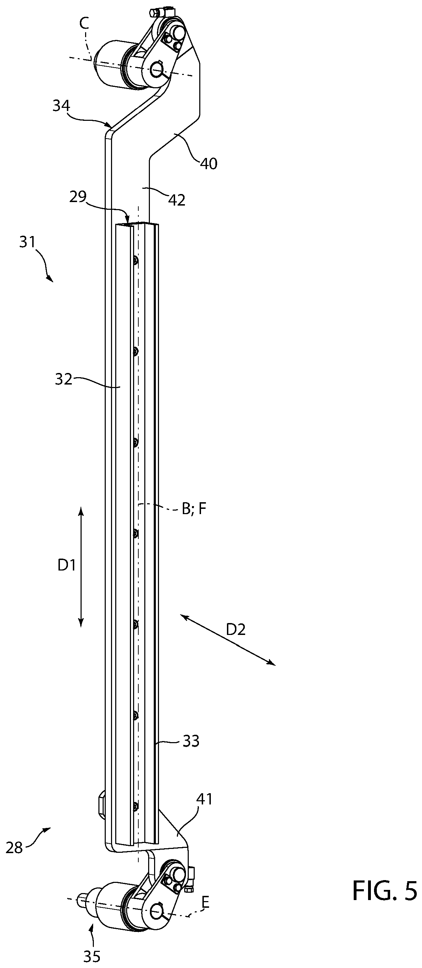

In further detail and with particular reference to Figures 3A, 3B and 5, actuation unit 31 may comprise one or more support bars 34, each one carrying one respective cam channel 29 and one or more actuators 35 (only partially shown), each one coupled to one respective support bar 34 and configured to move the support bar 34 along the respective cam movement direction D2 such to move the respective cam channel 29 along the cam movement direction D2.

Preferentially, each support bar 34 may be movably connected to a respective support column (not shown) of package forming apparatus 10.

According to some preferred non-limiting embodiments, each cam movement direction D2 may comprise a first component perpendicular to the respective central axis B and a second component parallel to the respective central axis B.

In particular, movement of each cam channel 29 along the respective cam movement direction D2 may be a linear movement.

With particular reference to Figures 3A, 3B and 5, each support bar 34 may be designed such that the respective cam movement direction D2 comprises the first component and the second component. In more detail, each support bar 34 may be designed such that activation of the respective actuator 35 may result in movement along the respective cam movement direction D2**.**

More specifically, each support bar 34 may comprise a first end portion 40 and a second end portion 41 opposite to the respective first end portion 40.

Advantageously, each first end portion 40 may be angularly movable about a first rotation axis C and the respective second end portion 41 may be angularly movable about a second rotation axis E so as to move the respective support bar 34 and thereby also the respective cam channel 29 along the respective cam movement direction D2.

Preferentially, each first end portion 40 and each second end portion 41 may be connected to the respective support column so as to be angularly movable about the respective first rotation axis C and the respective second rotation axis E, respectively.

Moreover, each support bar 34 may also comprise a respective intermediate portion 42 interposed between and/or connected to the respective first end portion 40 and the respective second end portion 41.

Preferentially, each cam channel 29 may be mounted onto the respective intermediate portion 42.

According to some possible non-limiting embodiments, each first end portion 40 and the respective second end portion 41 may transversally and/or laterally protrude away from the respective intermediate portion 42.

According to some preferred non-limiting embodiments, each intermediate portion 42 may rectilinearly extend along a respective longitudinal axis F.

According to some preferred non-limiting embodiments, each actuator 35 may be coupled to one of the respective first end portion 40 and the respective second end portion 41. Moreover, the other one of the respective first end portion 40 and the respective second end portion 41 angularly moves as a result of the angular movement actuated by the respective actuator 35.

In the specific case shown, each actuator 35 may be connected to the respective second end portion 41 and may be configured to directly actuate the respective angular movement about the respective second rotation axis E, while the respective first end portion 40 angularly moves about the respective first rotation axis C due to the angular movement of the respective second end portion 41.

Preferentially, each actuator 35 may comprise an electrical motor 36.

With particular reference to Figures 3A to 4, each cam mechanism 28 may also comprise one or more coupling bars 43, each one carrying one respective cam follower 30 and being coupled to one respective pair of interaction tabs 26.

Preferentially, each operative device 23 may comprise an actuation mechanism 49 (only partially shown) operatively coupled to the respective pair of interaction tabs 26 and configured to actuate the relative movement of the respective interaction tabs 26 with respect to one another.

According to some preferred non-limiting embodiments, each coupling bar 43 may be connected to the respective actuation mechanism 49 and being configured to transfer the movement of the respective cam follower 30 to the respective actuation mechanism 49, which in turn transfers the movement to the respective pair of interaction tabs 26.

According to some possible embodiments, each coupling bar 43 may also be angularly movably connected to the respective operative device 23, preferentially one of the respective first operative group 24 and the respective second operative group 25. More preferentially, each coupling bar 43 may be angularly movable about a rotation axis G.

Additionally, angular movement of coupling bar 43 may result in a linear movement of an actuator bar of the respective actuation mechanism 49.

According to some preferred non-limiting embodiments, each operative device 23 may comprise a connecting structure 44 having a respective first portion 45 and a respective second portion 46 being movable with respect to one another. Preferentially, each first portion 45 and the respective second portion 46 may be moved towards and may be withdrawn from one another.

Preferentially, each first operative group 24 may be connected to and/or carried by the respective first portion 45 and the respective second operative group 25 may be connected to and/or carried by the respective second portion 46. Moreover, movement of each first portion 45 and of the respective second portion 46 leads to movement of the respective first operative group 24 and the respective second operative group 25, respectively.

Preferentially, each coupling bar 43 may be angularly movably connected to and/or hinged to one of the respective first portion 45 and the respective second portion 46, preferentially thereby defining the respective rotation axis G.

Preferentially and as shown in Figures 3A and 3B, operation of cam mechanism 28 is coordinated with respect to the respective relative positions of the respective first operative group 24 and the respective second operative group 25 and/or the respective first portion 45 and the respective second portion 46 with respect to one another.

In other words, as already described above, each pair of interaction tabs 26 must interact with tube 4 such that the transversal sealing and the transversal cutting occurs at the correct position. Accordingly, each pair of interaction tabs 26 must be controlled from the respective first limit position towards the respective second limit position, prior or during control of the respective operative device 23 from the rest configuration to the active configuration.

In Figure 3A, first portion 45 and the respective second portion 46 are withdrawn from one another with the respective operative device 23 being in the respective rest configuration (i.e. the respective first operative group 24 and the respective second operative group 25 being withdrawn from one another), in which also the respective pair of interaction tabs 26 are in or close to the respective first limit position.

In Figure 3B, first portion 45 and the respective second portion 46 are approached to one another resulting also in the respective first operative group 24 and the respective second operative group 25 being approached to one another. In particular, the condition shown in Figure 3B corresponds to the respective operative device 23 being in the respective active configuration. Additionally, prior to first operative group 25 and the respective second operative group 26 being moved towards one another, the respective interaction tabs 26 of the respective pair are moved towards one another so as to engage and interact with tube 4.

With particular reference to Figure 2, each operative device 23 may comprise at least one sealing assembly having a respective sealing element 47 and a respective counter-sealing element 48 configured to transversally seal in cooperation with one another tube 4.

According to some preferred non-limiting embodiments, each first operative group 24 may comprise the respective sealing element 47 and the respective second operative group 25 may comprise the respective counter-sealing element 48.

More specifically, each sealing element 47 and the respective counter-sealing element 48 may be configured to at least transversally compress, in particular flat-lay and squeeze, and to transversally seal tube 4, in particular during advancement of tube 4 along tube advancement path Q.

Moreover, each sealing element 47 and the respective counter-sealing element 48 may be configured to engage tube 4 from opposite sides thereof.

In further detail, each sealing element 47 may comprise a source configured to generate the energy needed to obtain the sealing effect. For example, sealing element 58 may be a sonotrode having ultrasound-emitters or sealing element 58 may have an electromagnetic induction source. Each counter-sealing element 48 may be a passive element (i.e. not having an active source). For example counter-sealing element 48 may be a metal anvil or a deformable pad.

Additionally, each operative device 23 may comprise at least one cutting assembly configured to transversally cut tube 4. Preferentially, each cutting assembly may be configured to transversally cut tube 4 after sealing of tube 4 by means of the respective sealing assembly.

Preferentially, each sealing element 47 and the respective counter-sealing element 48 may be moved towards and withdrawn from one another with the respective first operative group 24 and the respective second operative group 25 being moved towards and withdrawn from one another, respectively.

Each cutting assembly may comprise a cutting blade being associated with one of the respective first operative group 24 and the respective second operative group 25, preferentially with the respective second operative group 25.

According to some preferred non-limiting embodiments, each operative device 23 may also comprise a forming shell assembly (not shown and known as such) configured to form tube 4, preferentially to at least partially define the shape of packages 2.

According to some preferred non-limiting embodiments, each forming shell assembly may at least comprise a first half-shell (not shown and known as such) and a second half-shell 59 configured to at least partially define in cooperation with one another the shape of packages 2. Preferentially, each first half-shell and the respective second half-shell 59 may be configured to contact tube 4 from opposite sides thereof.

According to some preferred non-limiting embodiments one of the first half-shell and second half-shell 59 may be coupled to first operative group 24 and the other one of the first half-shell and second half-shell 59 may be coupled to second operative group 25.

According to some preferred non-limiting embodiments one of the first half-shell and second half-shell 59 may be coupled to sealing element 47 and the other one of the first half-shell and second half-shell 59 may be coupled to counter-sealing element 48.

Preferentially, each first half-shell and the respective second half-shell 49 may be moved towards and withdrawn from one another with the respective first operative group 24 and the respective second operative group 25 being moved towards and withdrawn from one another, respectively.

With particular reference to Figures 3A and 3B, package forming apparatus 10 may comprise a support structure 55 movably carrying each operative device 23.

Support structure 55 may comprise one or more support assemblies 56 (only one shown), each one movably carrying one respective operative device 23.

According to some non-limiting embodiments, package forming apparatus 10 may comprise two, preferentially exactly two, operative devices 23, and support structure 55 may comprise two, preferentially exactly two, support assemblies 56.

Preferentially, support assemblies 56 may be spaced apparat from one another.

Even more preferentially, support assemblies 56 may be arranged such that, in use, the advancing tube 4 may be interposed between support assemblies 56. In other words, support assemblies 56 may define and/or delimit the advancement space through which, in use, tube 4 advances.

Advantageously, each support assembly 56 may comprise a respective first guide 57 and a respective second guide 58 spaced apart from the respective first guide 29.

Preferentially, each connecting structure 44 may be movably coupled to the respective first guide 57 and the respective second guide 58.

According to some preferred non-limiting embodiments, each support bar 34 may extend parallel to and/or may be arranged adjacent to the respective second guide 58.

According to some preferred non-limiting embodiments, each operative device 23 may be connected to the respective connecting structure 44 such to protrude into the advancement space of tube 4.

In more detail, each first operative group 24 and each second operative group 25 may be carried by the respective first portion 45 and the respective second portion 46, respectively, such to be arranged within the advancement space.

In use, packaging machine 1 produces packages 2 filled with the pourable product.

In more detail, conveying device 11 advances web 3 along web advancement path P. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 23 transversally seal, and preferentially cut tube 4. Preferentially, operative devices 23 also form packages 2 from tube 4.

During operation of each operative device 23, the respective first operative group 24 and the respective second operative group 25 are cyclically moved towards and withdrawn from one another.

Additionally, each pair of interaction tabs 26 is selectively moved between the respective first limit position and the respective second limit position by means of cam mechanism 28.

Each first operative group 24 and the respective second operative group 25 advance along respectively the respective first advancement path and the respective second advancement path, leading to the respective cam follower 30 moving within the respective cam channel 29 along the respective advancement direction D1.

Moreover, each actuation unit 31 moves the respective cam channel 29 along the respective cam movement direction D2 also resulting in movement of the respective cam follower 30 along the cam movement direction D2, which again results in a change of the relative position between the respective interaction tabs 26 of the respective pair.

The advantages of package forming apparatus 10 and/or packaging machine 1 according to the present invention will be clear from the foregoing description.

In particular, cam mechanism 28 comes along with a simple design allowing a precise control of the relative positions between the respective interaction tabs 26 of each pair of interaction tabs 26.

An even other advantage can be seen in that the cam mechanism 28 can be easily installed with a limited need of installation precision as each cam follower 30 interacts with cam channel 29, more precisely with the respective first wall 32 and the respective second wall 33.

Clearly, changes may be made to package forming apparatus 10 and/or packaging machine 1 as described herein without, however, departing from the scope of protection as defined in the accompanying claims.

## Claims

1. Package forming apparatus (10) for a packaging machine (1), the package forming apparatus (10) being configured to at least transversally seal a tube (4) made from a web of packaging material (3) for obtaining packages (2) from the tube (4);
wherein the package forming apparatus (10) comprises at least one operative device (23) having a first operative group (24) and a second operative group (25) configured to at least transversally seal the tube (4);
wherein one of the respective first operative group (24) and the respective second operative group (25) comprises a pair of movable interaction tabs (26) and the pair of interaction tabs (26) being configured to interact, in use, with the tube (4) from opposite sides thereof and being configured to move with respect to one another;
wherein the package forming apparatus (10) comprises a cam mechanism (28) configured to control the relative position of the interaction tabs (26) of the pair of interaction tabs (26);
wherein the cam mechanism (28) comprises at least:
- a cam channel (29); and
- a cam follower (30) coupled to the pair of interaction tabs (26), movably arranged within the cam channel (29), and being configured to move within the cam channel (28) along an advancement direction (D1);
wherein the interaction of the cam follower (30) with the cam channel (29) allows to control the relative position of the interaction tabs (26) with respect to one another, wherein the cam mechanism (28) further comprises an actuation unit (31) configured to move the cam channel (29) along a cam movement direction (D2) transversal to the advancement direction (D1);
wherein movement of the cam channel (28) along the cam movement direction (D2) leads also to a movement of the cam follower (29) along the cam movement direction (D2) resulting in a change of the relative position of the interaction tabs (26) with respect to one another.

2. Package forming apparatus according to claim 1, wherein the actuation unit (31) comprises a support bar (34) carrying the cam channel (29) and an actuator (35) coupled to the support bar (34) and configured to move the support bar (34) along the cam movement direction (D2) to move the cam channel (29) along the cam movement direction (D2).

3. Package forming apparatus according to claim 2, wherein the cam channel (28) rectilinearly extends along a central axis (B);
wherein the support bar (34) is designed such that the cam movement direction (D2) comprises a first component perpendicular to the central axis (B) and a second component parallel to the central axis (B).

4. Package forming apparatus according to claim 2 or 3, wherein the support bar (34) comprises a first end portion (40) and a second end portion (41) opposite to the first end portion (40);
wherein the first end portion (40) is angularly movable about a first rotation axis (C) and the second end portion (41) is angularly movable about a second rotation axis (E) so as to move the support bar (34) and the cam channel (29) along the cam movement direction (D2).

5. Package forming apparatus according to claim 4, wherein the actuator (35) is coupled to one of the first end portion (40) and the second end portion (41).

6. Package forming apparatus according to any one of claims 2 to 5, wherein the support bar (34) comprises a first end portion (40), a second end portion (41) opposite to the first end portion (40) and an intermediate portion (42) rectilinearly extending along a longitudinal axis (F);
wherein the first end portion (40) and the second end portion (41) transversally protrude from the intermediate portion (42).

7. Package forming apparatus according to any one of the preceding claims, wherein the pair of interaction tabs (26) is controllable between a first limit position in which the respective interaction tabs (26) are configured to be, in use, detached from the tube (4) and a second limit position in which the respective interaction tabs (26) are configured to be, in use, in contact with the tube (4);
wherein the interaction of the cam follower (30) with the cam channel (29) allows to control the pair of interaction tabs (26) between the respective first limit position and the respective second limit position.

8. Package forming apparatus according to any one of the preceding claims, wherein the cam channel (29) extends linearly.

9. Package forming apparatus according to any one of the preceding claims, wherein the cam channel (28) comprises a first wall (32) and a second wall (33) spaced apart from the first wall (31);
wherein the cam follower (30) is interposed between the first wall (31) and the second wall (33) and is configured to engage the first wall (31) and the second wall (33).

10. Package forming apparatus according to any one of the preceding claims, wherein the cam mechanism (28) comprises a coupling bar (43) carrying the cam follower (30) and coupling the cam follower (30) to the pair of interaction tabs (26).

11. Package forming apparatus according to claim 10, wherein the operative device (23) comprises an actuation mechanism (49) coupled to the pair of interaction tabs (26) and the coupling bar (43) and being configured to move the interaction tabs (26) of the pair of interaction tabs (26) as a result of the interaction of the cam follower (30) with the cam channel (29).

12. Package forming apparatus according to any one of the preceding claims, and further comprising a conveying unit configured to advance the first operative group (24) and the second operative group (25) along a first advancement path and a second advancement path, respectively;
wherein the cam follower (30) is configured to move within the cam channel (29) along the advancement direction (D1) and during and/or as a consequence of the advancement of the first operative group (24) and the second operative group (25) moving along respectively the first advancement path and the second advancement path.

13. Package forming apparatus according to any one of the preceding claims, wherein one of the first operative group (24) and the second operative group (25) comprises a sealing element (47) and the other one of the first operative group (24) and the second operative group (25) comprises a counter-sealing element (48);
wherein the sealing element (47) and the counter-sealing element (48) are configured to compress and to transversally seal in cooperation the tube (4).

14. Packaging machine (1) for forming packages (2) of a pourable product from an advancing tube (4) formed and longitudinally sealed from a web of packaging material (3);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of the preceding claims.

## Patentansprüche

1. Verpackungserzeugungsvorrichtung (10) für eine Verpackungsmaschine (1), wobei die Verpackungserzeugungsvorrichtung (10) konfiguriert ist, einen Schlauch (4), der aus einer Bahn eines Verpackungsmaterials (3) erzeugt wird, mindestens quer zu verschließen, um Verpackungen (2) aus dem Schlauch (4) zu erhalten;
wobei die Verpackungserzeugungsvorrichtung (10) mindestens eine Arbeitseinrichtung (23) umfasst, die eine erste Arbeitsgruppe (24) und eine zweite Arbeitsgruppe (25) aufweist, die konfiguriert sind, den Schlauch (4) mindestens quer zu verschließen;
wobei die jeweilige erste Arbeitsgruppe (24) oder die jeweilige zweite Arbeitsgruppe (25) ein Paar beweglicher Wechselwirkungszungen (26) umfasst und das Paar von Wechselwirkungszungen (26) konfiguriert ist, im Gebrauch mit dem Schlauch (4) von gegenüberliegenden Seiten davon in Wechselwirkung zu treten, und wobei sie konfiguriert sind, sich in Bezug zueinander zu bewegen;
wobei die Verpackungserzeugungsvorrichtung (10) einen Nockenmechanismus (28) umfasst, der konfiguriert ist, die relative Position der Wechselwirkungszungen (26) des Paars von Wechselwirkungszungen (26) zu steuern;
wobei der Nockenmechanismus (28) mindestens Folgendes umfasst:
- einen Nockenkanal (29); und
- ein Eingriffsglied (30), das mit dem Paar von Wechselwirkungszungen (26) gekoppelt ist, das in dem Nockenkanal (29) beweglich angeordnet ist und das konfiguriert ist, sich innerhalb des Nockenkanals (28) entlang einer Fortbewegungsrichtung (D1) zu bewegen;
wobei die Wechselwirkung des Eingriffsglieds (30) mit dem Nockenkanal (29) die Steuerung der relativen Position der Wechselwirkungszungen (26) in Bezug zueinander zulässt, wobei der Nockenmechanismus (28) ferner eine Betätigungseinheit (31) umfasst, die konfiguriert ist, den Nockenkanal (29) entlang einer Nockenbewegungsrichtung (D2) quer zu der Fortbewegungsrichtung (D1) zu bewegen;
wobei die Bewegung des Nockenkanals (28) entlang der Nockenbewegungsrichtung (D2) außerdem zu einer Bewegung des Eingriffsglieds (29) entlang der Nockenbewegungsrichtung (D2) führt, die zu einer Änderung der relativen Position der Wechselwirkungszungen (26) in Bezug zueinander führt.

2. Verpackungserzeugungsvorrichtung nach Anspruch 1, wobei die Betätigungseinheit (31) einen Stützstab (34), der den Nockenkanal (29) trägt, und einen Aktuator (35), der mit dem Stützstab (34) gekoppelt ist und konfiguriert ist, den Stützstab (34) entlang der Nockenbewegungsrichtung (D2) zu bewegen, um den Nockenkanal (29) entlang der Nockenbewegungsrichtung (D2) zu bewegen, umfasst.

3. Verpackungserzeugungsvorrichtung nach Anspruch 2, wobei der Nockenkanal (28) entlang einer Mittelachse (B) gradlinig verläuft;
wobei der Stützstab (34) in der Weise ausgelegt ist, dass die Nockenbewegungsrichtung (D2) eine erste Komponente senkrecht zu der Mittelachse (B) und eine zweite Komponente parallel zu der Mittelachse (B) umfasst.

4. Verpackungserzeugungsvorrichtung nach Anspruch 2 oder 3, wobei der Stützstab (34) einen ersten Endabschnitt (40) und einen zweiten Endabschnitt (41), der dem ersten Endabschnitt (40) gegenüberliegt, umfasst;
wobei der erste Endabschnitt (40) um eine erste Drehachse (C) in Winkelrichtung beweglich ist und der zweite Endabschnitt (41) um eine zweite Drehachse (E) in Winkelrichtung beweglich ist, um den Stützstab (34) und den Nockenkanal (29) entlang der Nockenbewegungsrichtung (D2) zu bewegen.

5. Verpackungserzeugungsvorrichtung nach Anspruch 4, wobei der Aktuator (35) mit dem ersten Endabschnitt (40) oder mit dem zweiten Endabschnitt (41) gekoppelt ist.

6. Verpackungserzeugungsvorrichtung nach einem der Ansprüche 2 bis 5, wobei der Stützstab (34) einen ersten Endabschnitt (40), einen zweiten Endabschnitt (41), der dem ersten Endabschnitt (40) gegenüberliegt, und einen Zwischenabschnitt (42), der entlang einer Längsachse (F) gradlinig verläuft, umfasst;
wobei der erste Endabschnitt (40) und der zweite Endabschnitt (41) von dem Zwischenabschnitt (42) quer vorstehen.

7. Verpackungserzeugungsvorrichtung nach einem der vorhergehenden Ansprüche, wobei das Paar von Wechselwirkungszungen (26) zwischen einer ersten Grenzposition, in der die jeweiligen Wechselwirkungszungen (26) konfiguriert sind, im Gebrauch von dem Schlauch (4) gelöst zu werden, und einer zweiten Grenzposition, in der die jeweiligen Wechselwirkungszungen (26) konfiguriert sind, im Gebrauch den Schlauch (4) zu berühren, steuerbar ist; wobei die Wechselwirkung des Eingriffsglieds (30) mit dem Nockenkanal (29) das Steuern des Paars von Wechselwirkungszungen (26) zwischen der jeweiligen ersten Grenzposition und der jeweiligen zweiten Grenzposition zulässt.

8. Verpackungserzeugungsvorrichtung nach einem der vorhergehenden Ansprüche, wobei der Nockenkanal (29) linear verläuft.

9. Verpackungserzeugungsvorrichtung nach einem der vorhergehenden Ansprüche, wobei der Nockenkanal (28) eine erste Wand (32) und eine zweite Wand (33), die von der ersten Wand (31) beabstandet ist, umfasst;
wobei das Eingriffsglied (30) zwischen der ersten Wand (31) und der zweiten Wand (33) eingefügt ist und konfiguriert ist, mit der ersten Wand (31) und mit der zweiten Wand (33) in Eingriff zu sein.

10. Verpackungserzeugungsvorrichtung nach einem der vorhergehenden Ansprüche, wobei der Nockenmechanismus (28) einen Kopplungsstab (43), der das Eingriffsglied (30) trägt und das Eingriffsglied (30) mit dem Paar von Wechselwirkungszungen (26) koppelt, umfasst.

11. Verpackungserzeugungsvorrichtung nach Anspruch 10, wobei die Arbeitseinrichtung (23) einen Betätigungsmechanismus (49) umfasst, der mit dem Paar von Wechselwirkungszungen (26) und mit dem Kopplungsstab (43) gekoppelt ist und konfiguriert ist, die Wechselwirkungszungen (26) des Paars von Wechselwirkungszungen (26) im Ergebnis der Wechselwirkung des Eingriffsglieds (30) mit dem Nockenkanal (29) zu bewegen.

12. Verpackungserzeugungsvorrichtung nach einem der vorhergehenden Ansprüche, die ferner eine Fördereinheit, die konfiguriert ist, die erste Arbeitsgruppe (24) und die zweite Arbeitsgruppe (25) entlang eines ersten Fortbewegungswegs bzw. eines zweiten Fortbewegungswegs fortzubewegen, umfasst;
wobei das Eingriffsglied (30) konfiguriert ist, sich in dem Nockenkanal (29) entlang der Fortbewegungsrichtung (D1) zu bewegen und während und/oder infolge der Fortbewegung der ersten Arbeitsgruppe (24) und der zweiten Arbeitsgruppe (25) entlang des ersten Fortbewegungswegs bzw. des zweiten Fortbewegungswegs zu bewegen.

13. Verpackungserzeugungsvorrichtung nach einem der vorhergehenden Ansprüche, wobei die erste Arbeitsgruppe (24) oder die zweite Arbeitsgruppe (25) ein Verschlusselement (47) umfasst und wobei die andere der ersten Arbeitsgruppe (24) und der zweiten Arbeitsgruppe (25) ein Gegenverschlusselement (48) umfasst;
wobei das Verschlusselement (47) und das Gegenverschlusselement (48) konfiguriert sind, den Schlauch (4) im Zusammenwirken zusammenzudrücken und quer zu verschließen.

14. Verpackungsmaschine (1) zum Erzeugen von Verpackungen (2) eines gießfähigen Erzeugnisses aus einem sich fortbewegenden Schlauch (4), der aus einer Bahn eines Verpackungsmaterials (3) erzeugt und in Längsrichtung verschlossen wird;
wobei die Verpackungsmaschine (1) Folgendes umfasst:
- eine Fördereinrichtung (11), die konfiguriert ist, die Bahn des Verpackungsmaterials (3) entlang eines Bahnfortbewegungswegs (P) fortzubewegen, und zum Fortbewegen des Schlauchs (4) entlang eines Schlauchfortbewegungswegs (Q);
- eine Schlaucherzeugungs- und Schlauchverschlusseinrichtung (12), die konfiguriert ist, den Schlauch (4) aus der Bahn des Verpackungsmaterials (3) zu erzeugen und den Schlauch (4) in Längsrichtung zu verschließen;
- eine Fülleinrichtung (13) zum Befüllen des Schlauchs (4) mit dem gießfähigen Erzeugnis; und
- eine Verpackungserzeugungsvorrichtung (10) nach einem der vorhergehenden Ansprüche.

## Revendications

1. Appareil (10) de formation d'emballages destiné à une machine (1) d'emballage, l'appareil (10) de formation d'emballages étant configuré pour sceller au moins transversalement un tube (4) fait d'une bande de matériau d'emballage (3) en vue d'obtenir des emballages (2) à partir du tube (4) ;
dans lequel l'appareil (10) de formation d'emballages comprend au moins un dispositif fonctionnel (23) ayant un premier groupe fonctionnel (24) et un second groupe fonctionnel (25) configurés pour sceller au moins transversalement le tube (4) ;
dans lequel l'un du premier groupe fonctionnel (24) respectif et du second groupe fonctionnel (25) respectif comprend une paire de languettes d'interaction (26) mobiles et la paire de languettes d'interaction (26) étant configurées pour interagir, en utilisation, avec le tube (4) à partir de côtés opposés de celui-ci et étant configurées pour se déplacer l'une par rapport à l'autre ;
dans lequel l'appareil (10) de formation d'emballages comprend un mécanisme de came (28) configuré pour commander la position relative des languettes d'interaction (26) de la paire de languettes d'interaction (26) ;
dans lequel le mécanisme de came (28) comprend au moins :
- un canal de came (29) ; et
- un galet de came (30) couplé à la paire de languettes d'interaction (26), agencé de manière mobile à l'intérieur du canal de came (29), et étant configuré pour se déplacer à l'intérieur du canal de came (28) le long d'une direction d'avancement (D1) ;
dans lequel l'interaction du galet de came (30) avec le canal de came (29) permet de commander la position relative des languettes d'interaction (26) l'une par rapport à l'autre, dans lequel le mécanisme de came (28) comprend en outre une unité d'actionnement (31) configurée pour déplacer le canal de came (29) le long d'une direction de déplacement de came (D2) transversale à la direction d'avancement (D1) ;
dans lequel le déplacement du canal de came (28) le long de la direction de déplacement de came (D2) conduit également à un déplacement du galet de came (29) le long de la direction de déplacement de came (D2) résultant en un changement de la position relative des languettes d'interaction (26) l'une par rapport à l'autre.

2. Appareil de formation d'emballages selon la revendication 1, dans lequel l'unité d'actionnement (31) comprend une barre de support (34) portant le canal de came (29) et un actionneur (35) couplé à la barre de support (34) et configuré pour déplacer la barre de support (34) le long de la direction de déplacement de came (D2) pour déplacer le canal de came (29) le long de la direction de déplacement de came (D2).

3. Appareil de formage d'emballages selon la revendication 2, dans lequel le canal de came (28) s'étend de manière rectiligne le long d'un axe central (B) ;
dans lequel la barre de support (34) est conçue de telle sorte que la direction de déplacement de came (D2) comprend une première composante perpendiculaire à l'axe central (B) et une seconde composante parallèle à l'axe central (B).

4. Appareil de formation d'emballages selon la revendication 2 ou la revendication 3, dans lequel la barre de support (34) comprend une première portion d'extrémité (40) et une seconde portion d'extrémité (41) opposée à la première portion d'extrémité (40) ;
dans lequel la première portion d'extrémité (40) est mobile angulairement autour d'un premier axe de rotation (C) et la seconde portion d'extrémité (41) est mobile angulairement autour d'un second axe de rotation (E) de manière à déplacer la barre de support (34) et le canal de came (29) le long de la direction de déplacement de came (D2).

5. Appareil de formation d'emballages selon la revendication 4, dans lequel l'actionneur (35) est couplé à l'une de la première portion d'extrémité (40) et de la seconde portion d'extrémité (41).

6. Appareil de formation d'emballages selon l'une quelconque des revendications 2 à 5, dans lequel la barre de support (34) comprend une première portion d'extrémité (40), une seconde portion d'extrémité (41) opposée à la première portion d'extrémité (40) et une portion intermédiaire (42) s'étendant de manière rectiligne le long d'un axe longitudinal (F) ;
dans lequel la première portion d'extrémité (40) et la seconde portion d'extrémité (41) font saillie transversalement à partir de la portion intermédiaire (42).

7. Appareil de formation d'emballages selon l'une quelconque des revendications précédentes, dans lequel la paire de languettes d'interaction (26) peut être commandée entre une première position limite dans laquelle les languettes d'interaction (26) respectives sont configurées pour être, en utilisation, détachées du tube (4) et une seconde position limite dans laquelle les languettes d'interaction (26) respectives sont configurées pour être, en utilisation, en contact avec le tube (4) ;
dans lequel l'interaction du galet de came (30) avec le canal de came (29) permet de commander la paire de languettes d'interaction (26) entre la première position limite respective et la seconde position limite respective.

8. Appareil de formage d'emballages selon l'une quelconque des revendications précédentes, dans lequel le canal de came (29) s'étend de manière linéaire ;

9. Appareil de formation d'emballages selon l'une quelconque des revendications précédentes, dans lequel le canal de came (28) comprend une première paroi (32) et une seconde paroi (33) espacée de la première paroi (31).
dans lequel le galet de came (30) est interposé entre la première paroi (31) et la seconde paroi (33) et est configuré pour venir en prise avec la première paroi (31) et la seconde paroi (33).

10. Appareil de formation d'emballages selon l'une quelconque des revendications précédentes, dans lequel le mécanisme de came (28) comprend une barre de couplage (43) portant le galet de came (30) et couplant le galet de came (30) à la paire de languettes d'interaction (26).

11. Appareil de formation d'emballages selon la revendication 10, dans lequel le dispositif opérationnel (23) comprend un mécanisme d'actionnement (49) couplé à la paire de languettes d'interaction (26) et à la barre de couplage (43) et étant configuré pour déplacer les languettes d'interaction (26) de la paire de languettes d'interaction (26) en résultat de l'interaction du galet de came (30) avec le canal de came (29).

12. Appareil de formation d'emballages selon l'une quelconque des revendications précédentes, et comprenant en outre une unité d'acheminement configurée pour faire avancer le premier groupe fonctionnel (24) et le second groupe fonctionnel (25) le long d'un premier chemin d'avancement et d'un second chemin d'avancement, respectivement ;
dans lequel le galet de came (30) est configuré pour se déplacer à l'intérieur du canal de came (29) le long de la direction d'avancement (D1) et pendant et/ou en conséquence de l'avancement du premier groupe fonctionnel (24) et du second groupe fonctionnel (25) se déplaçant respectivement le long du premier chemin d'avancement et du second chemin d'avancement.

13. Appareil de formation d'emballages selon l'une quelconque des revendications précédentes, dans lequel l'un du premier groupe fonctionnel (24) et du second groupe fonctionnel (25) comprend un élément de scellement (47) et l'autre du premier groupe fonctionnel (24) et du second groupe fonctionnel (25) comprend un élément de contre-scellement (48) ;
dans lequel l'élément de scellement (47) et l'élément de contre-scellement (48) sont configurés pour comprimer et sceller transversalement en coopération le tube (4).

14. Machine (1) d'emballage pour former des emballages (2) d'un produit versable à partir d'un tube avançant (4) formé et scellé longitudinalement à partir d'une bande de matériau d'emballage (3) ;
la machine (1) d'emballage comprenant :
- un dispositif d'acheminement (11) configuré pour faire avancer la bande de matériau d'emballage (3) le long d'un chemin d'avancement de bande (P) et pour faire avancer le tube (4) le long d'un chemin d'avancement de tube (Q) ;
- un dispositif de formation et de scellement de tube (12) configuré pour former le tube (4) à partir de la bande de matériau d'emballage (3) et pour sceller longitudinalement le tube (4) ;
- un dispositif de remplissage (13) pour remplir le tube (4) avec le produit versable ; et
- un appareil (10) de formation d'emballages selon l'une quelconque des revendications précédentes.
